# EUROPEAN PATENT APPLICATION

(11) **EP 4 628 620 A1**
(43) Date of publication of application: **08.10.2025**
(21) Application number: 24741251.3
(22) Date of filing: 09.01.2024
(51) Int. Cl.: C23C 2/06, C23C 2/12, C23C 2/20, B05D 3/02

(54) **ZINC-ALUMINUM-MAGNESIUM-PLATED STEEL SHEET AND MANUFACTURING METHOD THEREFOR**

(30) Priority: 10.01.2023 CN 202310032894
(71) Applicant: BAOSHAN IRON & STEEL CO., LTD., Shanghai 201900 (CN)
(72) Inventor: WANG, Kai, Shanghai 201900 (CN); JIN, Xinyan, Shanghai 201900 (CN); REN, Yuling, Shanghai 201900 (CN); LIN, Chuanhua, Shanghai 201900 (CN); QIANG, Shaoming, Shanghai 201900 (CN); SHI, Liangquan, Shanghai 201900 (CN)
(74) Representative: Nederlandsch Octrooibureau
(86) International application number: PCT/CN2024/071398
(87) International publication number: WO 2024/149254

(57) **Abstract**

A zinc-aluminum-magnesium-plated steel plate and manufacturing thethod therefor. The steel plate comprises a steel substrate and a plating layer provided on the steel substrate, and the surface of the plating layer is coated with a fingerprint-resistant film; the plating layer comprises the following components in mass percentage: Al: 45%-65%, Mg: 0.2%-5.0%, Si: 0.1%-3.0%, Zr: 0.001%-0.15%, Ca: 0.001%-0.15%, and the balance being Zn and inevitable impurities.

## Description

### TECHNICAL FIELD

The present invention relates to a steel and manufacturing method therefor, and in particular to a plated steel plate and manufacturing method therefor.

### BACKGROUND

At present, to prepare steel plate products with longer service life, the market and users have higher and higher requirements for the corrosion resistance of steel materials. Zinc-aluminum-magnesium-plated steel plates have been recognized by the market due to their excellent corrosion resistance.

In recent years, zinc-aluminum-magnesium-plated steel plate products with high aluminum content in the plating layer have emerged in the market, offering improved corrosion resistance. However, such zinc-aluminum-magnesium-plated steel plate products are prone to occur "blackening" during production, storage, transportation, or use, that is, the surface of the steel plate is prone to blackening, affecting the appearance and use of the steel plate product.

At present, there are differences in the technical paths of producing zinc-aluminum-magnesium-plated steel plates between domestic and foreign producers. The post-treatment film on the surface of zinc-aluminum-magnesium-plated steel plate abroad mainly adopts a two-step process, that is, firstly, the surface of the plating layer is passivated, and then the required film is coated on the surface of the plating layer. The blackening resistance of the final prepared zinc-aluminum-magnesium-plated steel plate is better. In contrast, domestic production of zinc-aluminum-magnesium-plated steel plates adopts a one-step process for post-treatment film, that is, the required film is coated on the surface of the plating layer in a single step. This one-step coating process is very efficient, which not only reduces equipment investment, but also saves costs, and has good economic benefits and application prospects.

However, the development and coating process control of the post-treatment film currently face practical challenges. The zinc-aluminum-magnesium-plated steel plate produced by the above-mentioned one-step coating process is prone to blackening, especially under conditions such as humid heat, stacking, and rainwashing.

### SUMMARY

To solve the above-mentioned problems existing in the prior art, the present invention provides a zinc-aluminum-magnesium-plated steel plate, which has excellent blackening resistance, particularly remarkable blackening resistance under hot and humid environment. It can overcome the problem that the existing zinc-aluminum-magnesium-plated steel plate products are prone to blackening, ensuring good appearance during long-term use and meeting the use needs of users.

The first aspect of the present invention provides a zinc-aluminum-magnesium-plated steel plate, comprising a steel substrate and a plating layer provided on the steel substrate, the surface of the plating layer is coated with a fingerprint-resistant film; the plating layer comprises the following components in mass percentage: Al: 45%-65%, Mg: 0.2%-5.0%, Si: 0.1%-3.0%, Zr: 0.001%-0.15%, Ca: 0.001%-0.15%, and the balance being Zn and inevitable impurities.

It is known that the mass of the plating layer on the surface of the steel substrate directly affects the blackening resistance performance of the plated steel plate. Therefore, in the present invention, the inventors have optimized and designed the chemical composition of the plating layer.

In the plating layer of the zinc-aluminum-magnesium-plated steel plate of the present invention, the design principles of each chemical element are as follows:
Al: Al element is easily oxidized, and the oxide film is very dense. The aluminum-rich phase oxide film formed can give the plating layer excellent protection capabilities, thus endowing the plating layer with superior corrosion resistance. Therefore, to play the beneficial effects of Al element, the mass percentage content of Al element in the plating layer is controlled to be between 45% - 65% in the present invention.

Mg: Mg element can corrode simultaneously with Zn to form corrosion products, and the corrosion products of Mg are denser, have better protection than the corrosion products of pure Zn, and can improve the corrosion resistance of the plating layer. Therefore, to ensure the corrosion resistance of the plating layer, the mass percentage content of Mg element in the plating layer is controlled to be between 0.2% - 5.0% in the present invention.

Si: In the plating layer of the zinc-aluminum-magnesium-plated steel plate of the present invention, adding an appropriate amount of Si can reduce the reaction between the substrate and Al in the liquid molten plating bath during formation of the plating layer, thereby ensuring the flatness of the substrate and the uniformity of the plating layer. Based on this, in the present invention, the mass percentage content of Si element in the plating layer is controlled to be between 0.1% - 3.0%.

Zr: In the plating layer of the zinc-aluminum-magnesium-plated steel plate of the present invention, an appropriate amount of Zr element needs to be added. During the formation of the plating layer, when the molten plating layer alloy cools, the Zr element can cooperate with the Al element to form Al₃Zr particles, which participate in the peritectic reaction to refine the aluminum-rich phase of the surface of the steel plate, increase the aluminum-rich phase on the surface of the steel plate, and enhance the Al/Zn ratio of the surface of the plating layer, thereby improving the corrosion resistance of the plating layer. Therefore, to play the beneficial effects of Zr element, the mass percentage content of Zr in the plating layer is controlled to be between 0.001% - 0.15% in the present invention.

Ca: The role of Ca element is to inhibit the formation of oxides on the surface of the liquid molten plating bath, reduce the amount of slag produced, and thereby reduce the surface quality defects of the plated steel plate caused by the oxides and slag of the plating bath. Therefore, to play the beneficial effects of Ca element, the mass percentage content of Ca in the plating layer is controlled to be between 0.001% - 0.15% in the present invention.

Preferably, in the zinc-aluminum-magnesium-plated steel plate of the present invention, the mass percentage contents of each component in the plating layer satisfy at least one of the following:
Al: 50% - 60%,
Mg: 1.0% - 3.0%,
Si: 1.0% - 2.0%,
Zr: 0.01% - 0.1%,
Ca: 0.01% - 0.1%.

Preferably, in the zinc-aluminum-magnesium-plated steel plate of the present invention, the plating layer has a thickness of 8-38 µm.

In the above-mentioned technical solution of the present invention, the thickness of the plating layer is controlled at 8-38 µm. When the thickness of the plating layer is lower than 8 µm, the corrosion resistance of the plating layer is poor, the protection for the substrate is inadequate, the uniformity of the plating layer covering the substrate is reduced. To obtain a plated steel plate with excellent surface quality, the requirements for the substrate and plating layer thickness control equipments are very high, resulting in production difficulties. When the thickness of the plating layer is higher than 38 µm, the requirements for the plating layer thickness control equipment become extremely high, and the uniformity of the plating layer is difficult to guarantee, and it is difficult to produce a zinc-aluminum-magnesium-plated steel plate with good surface quality.

Preferably, in the zinc-aluminum-magnesium-plated steel plate of the present invention, the fingerprint-resistant film has a thickness of 0.5-2.5 µm. In the solution of the present invention, the composition of the fingerprint-resistant film is not particularly limited and can be a water-soluble resin commonly used in the prior art, such as acrylic resin, polyurethane resin, etc. The coating method of fingerprint-resistant film is also not particularly limited and can be formed by spraying, roll coating, electrophoresis, and other methods. The fingerprint-resistant film can improve the corrosion resistance of the plated steel plate and enhance the appearance of the steel plate.

In the above-mentioned technical solution of the present invention, the thickness of the fingerprint-resistant film coated on the plating layer surface is controlled to be between 0.5-2.5 µm. When the thickness of the fingerprint-resistant film is lower than 0.5 µm, the coverage of the fingerprint-resistant film on the plated steel plate decreases, causing local missing coating, affecting the corrosion resistance, blackening resistance, formability, and other properties of the plated steel plate. When the thickness of the fingerprint-resistant film is higher than 2.5 µm, the requirements for the film thickness control equipment become extremely high, and the uniformity of the fingerprint-resistant film is difficult to guarantee. The requirements for the subsequent heating, baking, and curing process are also very high, and the electrical conductivity and other properties of the fingerprint-resistant film will also deteriorate.

More preferably, in the zinc-aluminum-magnesium-plated steel plate of the present invention, the fingerprint-resistant film has a thickness of 1.0-2.0 µm.

Preferably, in the zinc-aluminum-magnesium-plated steel plate of the present invention, the surface color difference ΔE of the zinc-aluminum-magnesium-plated steel plate before and after laminated humid-heat treatment for 24 hours is < 3, where ΔE is the difference between the surface lightness value before the laminated humid-heat treatment and the surface lightness value after 24 hours of humid-heat treatment of the zinc-aluminum-magnesium-plated steel plate.

In the technical solution of the invention, the laminated humid-heat treatment is that the steel plates are stacked together under conditions of a relatively high temperature (50°C) and a relatively high humidity (95%). Under those conditions, there are small gaps between the stacked steel plates. Under the combined action of water vapor and oxygen, the steel plates undergo electrochemical corrosion. If the blackening resistance of the steel plates is poor, the surface layer of the steel plates will be corroded, causing local or overall blackening of the steel plates, i.e., blackening problem.

The inventors found that if the blackening resistance of the steel plates is poor, the steel plates will also undergo blackening under the conditions of water vapor, rainwater, or dew during the storage or use, but this is a long and slow process. It takes a long time to detect the blackening problem of the steel plates. In addition, the inventors also found that the laminated humid-heat conditions are relatively harsh conditions, with relatively high temperature, high humidity, water vapor, and small gaps created by lamination, which are conducive to forming conditions for electrochemical corrosion and accelerating the corrosion of the surface layer of the steel plate. If the blackening resistance of the steel plate is poor, the blackening problem of the steel plates can be detected within 24 hours under the laminated humid-heat conditions, and the blackening risk of the steel plates can be monitored.

Furthermore, the inventors also found that when the steel plates undergo blackening, the lightness value of the steel plate surface decreases. In the present invention, the color difference ΔE is the difference between the surface lightness value of the steel plate before laminated humid-heat treatment and the surface lightness value after 24 hours of humid-heat treatment. ΔE ≥ 3 indicates that the blackening phenomenon is visible to the naked eye, especially when the steel plate undergoes local blackening.

The zinc-aluminum-magnesium-plated steel plate designed by the present invention has excellent blackening resistance under humid-heat conditions. The surface color difference ΔE of the zinc-aluminum-magnesium-plated steel plate before and after being treated for 24 hours under laminated humid-heat conditions is < 3, that is, there is no blackening phenomenon visible to the naked eye.

Correspondingly, another objective of the present invention is to provide a method for manufacturing the above-mentioned zinc-aluminum-magnesium-plated steel plate. The method is simple and can be used to effectively prepare the above-mentioned zinc-aluminum-magnesium-plated steel plate.

The present invention relates to a method for manufacturing a zinc-aluminum-magnesium-plated steel plate, which comprises the following steps carried out in sequence:
(1) Performing a pretreatment for a steel substrate;
(2) Feeding the pretreated steel substrate into a plating bath to perform hot-dip galvanizing in the plating bath, obtaining a plated steel plate;
(3) After the plated steel plate leaves the plating bath, performing the following staged cooling: wherein the first stage is air cooling, the steel plate is cooled to 300°C or less, a cooling rate of the first stage is 10-60°C/s; the second stage is roll cooling or roll cooling + air cooling to cool the steel plate to 100°C or less, in which a cooling rate of roll cooling is 60-100 °C/s; the third stage is water cooling to room temperature in a quenching water tank, and a plate temperature is lower than 100°C when the plated steel plate enters the quenching water tank; optionally, squeezing and drying the steel plate afterward;
(4) Coating a fingerprint-resistant film on the surface of the plated steel plate and heating and baking at 100-160°C to cure the film;
(5) Cooling the plated steel plate to room temperature;
(6) Coiling the plated steel plate into a finished product coil.

In the above-mentioned manufacturing method, the pretreatment in step (1) can comprise: cleaning the steel substrate to remove dirt and grease from the surface of the steel substrate, and then performing a reduction annealing on the cleaned and degreased steel substrate to remove oxides from the surface of the steel substrate.

In the above-mentioned step (2), the steel substrate is fed into a plating bath for hot dip galvanizing, wherein the chemical composition of the plating bath is substantially the same as that of the steel substrate plating layer. The chemical elements of the steel substrate plating layer can be controlled by controlling the chemical elements of the plating bath.

In the above-mentioned step (3), after the plated steel plate leaves the plating bath, it firstly passes through an air knife, the thickness of the plating layer on the steel plate is controlled within the range of production requirements by blowing nitrogen, and the plating layer is cooled to a certain extent. Thereafter, the plated steel plate needs to undergo staged cooling, wherein:
the first stage is air-cooling through an air box to cool the steel plate to 300°C or less, and a cooling rate is 10-60°C/s;
the second stage adopts roll cooling or roll cooling + air cooling, in which the cooling rate of roll cooling is 60-100°C/s, the steel plate is cooled to 100°C or less by the second stage, so that the plate temperature is lower than 100°C when the steel plate enters the quenching water tank.

After the steel plate is cooled to 100°C or less, the cooling of the third stage is carried out, that is, entering the quenching water tank for water cooling.

When the plate temperature is 100°C or more when the steel plate enters the quenching water tank, the plating layer on the surface of the steel plate will react with water, causing corrosion of the surface of the plating layer, affecting the coating effect of the subsequent fingerprint-resistant film, and the finished steel plate is more prone to occur blackening problem under humid-heat conditions. Therefore, the plate temperature should be controlled lower than 100°C when the steel plate enters the quenching water tank.

Preferably, the steel plate is squeezed and dried after staged cooling.

In addition, in step (4) of the manufacturing method of the present invention, a fingerprint-resistant film can be coated on the surface of the plated steel plate by roll coating, and the thickness of the fingerprint-resistant film can be specifically controlled according to the production requirements. After the fingerprint-resistant film is coated on the surface of the steel plate, electromagnetic induction heating can be used to perform heating and baking at 100-160°C to cure the fingerprint-resistant film.

In the present invention, the heating and baking temperature should be controlled to be between 100-160°C. When the heating and baking temperature is lower than 100°C, the fingerprint-resistant film cannot be sufficiently baked and cured, the internal cross-linking and curing degree of the fingerprint-resistant film is not complete, and the water-proof performance and other properties deteriorate. External water vapor is more likely to pass through the fingerprint-resistant film to contact and react with the plating layer under the film, causing corrosion of the plating layer surface and the blackening of the plated steel plate. This is particularly prone to blackening problems under conditions such as steel coil water ingress, condensation, pressed plate stacking water ingress, and laminated humid-heat conditions. When the heating and baking temperature is higher than 160°C, the fingerprint-resistant film will be over-baked, resulting in the deterioration of the performance of the fingerprint-resistant film. Moreover, excessively high heating and baking temperature imposes high requirements on the cooling step equipments after heating and baking, leading to high energy consumption and increased production costs.

Preferably, in the manufacturing method of the present invention, in step (2), the temperature of the plating bath is 570-610°C. As an implementation manner, in step (3), the second stage is roll cooling + air cooling, in which the cooling rate of roll cooling is 60-100°C/s, and the cooling rate of air cooling is 20-30°C/s.

When the temperature of the plating bath is higher than 610°C, the reaction between Fe in the steel substrate and Al in the plating bath will intensify after the steel substrate enters the plating bath, leading to the thickening of the alloy layer mainly composed of Al and Fe formed at the interface between the plating layer and the steel substrate, resulting in the deterioration of the processing formability of the plated steel plate. Moreover, when the temperature of the plating bath is too high, the dissolution of Fe in the steel substrate in the plating bath intensifies, and the evaporation of Zn in the furnace nose also intensifies, resulting in an increase of bottom slag and surface slag in the plating bath, and an increase of zinc ash in the furnace nose, resulting in reduced surface quality of the plated steel plate, increased zinc consumption, and higher production costs. In addition, when the temperature of the plating bath is too high, the corrosion of the cooling rollers by the plating bath will also intensify, reducing the service life of the roller system device and increasing production risks.

When the temperature of the plating bath is lower than 570°C, the fluidity of the plating bath will decrease, making it difficult to control the plating layer thickness, thereby making it difficult to ensure the uniformity and surface quality of the plating layer. Moreover, when the temperature of the plating bath is too low, after the steel substrate enters the plating bath, the alloy layer at the plating layer-substrate interface formed by the reaction between Fe in the substrate with Al in the plating bath is incomplete or thin, thus affecting the adhesion of the plating layer or the formability of the plated steel plate. Therefore, considering the influence of the temperature of the plating bath, in the manufacturing method of the present invention, the temperature of the plating bath is preferably controlled to be between 570-610°C.

Preferably, in the manufacturing method of the present invention, in step (4), the heating and baking is performed at 110-140°C.

Preferably, in the manufacturing method of the present invention, in step (4), the heating and baking is performed by electromagnetic induction heating.

Preferably, in the manufacturing method of the present invention, in step (5), the cooling is performed by air cooling, wherein the cooling rate of the plated steel plate is 5-20°C/s.

In the cooling process of step (5), the cooling rate of the steel plate is preferably controlled to be at 5-20°C/s. When the cooling rate is higher than 20°C/s, the requirements for cooling equipment are very high, and production is difficult to achieve. In addition, when the cooling rate of air cooling is too high, the fan flow is very large, and the strip steel shakes significantly, making it impossible to accurately measure the thickness of the fingerprint-resistant film and not conducive to the stable control of the film thickness. When the cooling rate is lower than 5°C/s, the fingerprint-resistant film cannot be sufficiently cooled, which is not conducive to the aging of the film, resulting in the deterioration of the performance of the fingerprint-resistant film.

Compared with the prior art, the zinc-aluminum-magnesium-plated steel plate and its manufacturing method have the following advantages and beneficial effects:
The present invention provides a new zinc-aluminum-magnesium-plated steel plate with excellent blackening resistance performance. The steel substrate surface of the zinc-aluminum-magnesium-plated steel plate is coated with a plating layer with optimized and designed composition, and the plating layer surface is also coated with a fingerprint-resistant film. The surface color difference ΔE before and after 24 hours of treatment under humid-heat conditions is < 3, demonstrating excellent blackening resistance, and can overcome the blackening problem of existing zinc-aluminum-magnesium-plated steel plate products. The zinc-aluminum-magnesium-plated steel plate of the present invention has a good appearance in the long-term use, which can further enhance the user experience and promote the sound development of zinc-aluminum-magnesium-plated steel plate products.

In addition to the above-mentioned advantages, the present invention also optimizes and designs the manufacturing method for zinc-aluminum-magnesium-plated steel plates. The process is simple and through the control of post-treatment coating process, heating and baking process, and cooling process, the blackening resistance of steel plate can be effectively improved to ensure that the prepared zinc-aluminum-magnesium-plated steel plate has excellent blackening resistance.

### DETAILED DESCRIPTION

The zinc-aluminum-magnesium-plated steel plate and its manufacturing method according to the present invention will be further explained and illustrated in combination with specific embodiments below. However, the explanations and illustrations do not constitute improperly limitations on the technical solutions of the present invention.

### Examples A1-A9 and Comparative Examples B1-B4

The zinc-aluminum-magnesium-plated steel plates of Examples A1-A9 were manufactured using the following steps (1) - (6):
(1) Performing a pretreatment for a steel substrate: a cold-rolled hard steel plate with a thickness of 0.6 mm was used as the substrate. After cleaning and degreasing treatment, performing an annealing for 2 minutes at 770°C under a protective atmosphere of N₂-5 vol% H₂.
(2) Pretreated steel substrate entering a plating bath and performing hot-dip galvanizing in the plating bath: the steel substrate was immersed in the plating bath for hot-dip galvanizing, and the temperature of the plating bath is controlled at 570-610°C. After immersion plating for 3 seconds, the plated steel plate was obtained. The chemical compositions of the plating bath used in each example and comparative example are shown in Table 1.
(3) After the plated steel plate left the plating bath, it passed through an air knife to control the thickness of the plating layer by adjusting the blowing intensity of the air knife, followed by staged cooling: the first stage was air-cooling performed via an air box to cool the steel plate to 300°C or less, and the cooling rate of the steel plate was 10-60°C/s; the second stage was roll cooling or roll cooling + air cooling to cool the steel plate to 100°C or less, with a cooling rate of roll cooling of 60-100°C/s, and a cooling rate of air cooling of 20-30°C/s; the third stage was water-cooling performed in a quenching water tank. When the steel plate entered the quenching water tank, the plate temperature was lower than 100°C, and the final cooling temperature is room temperature. It should be noted that Comparative Examples B1-B3 only used air-cooling and water-cooling. The manufacturing process of Comparative Example B4 complied with the limitations of the present invention.
(4) Coating the plated steel plate with a fingerprint resistant film by a roll coating machine, controlling the thickness of the fingerprint-resistant film by adjusting the rotation speed and roller spacing of the roll coating machine; after the fingerprint-resistant film was coated on the surface of the plated steel plate, the steel plate passed through an induction heater and was heated at 100-160°C to heat, bake, and cure the fingerprint-resistant film by electromagnetic induction heating.
(5) Air cooling the steel plate via a fan to room temperature, controlling the cooling rate of the steel plate to be 5-20°C/s.
(6) Coiling the steel plate into a finished steel coil when it was cooled to room temperature or close to room temperature.

The specific parameters of the above-mentioned processes are listed in Table 2.

It should be noted that the type of steel substrate used is not specially limited in the present invention. In practical applications, those skilled in the art can select according to the requirements, such as the commonly used DC51 and S350 steel plates. The specific type of steel substrate has no direct correlation with the excellent blackening resistance of the plating layer formed on its surface.

Table 1 lists the chemical element mass percentage ratios of the plating baths and the formed plating layers used for the zinc-aluminum-magnesium-plated steel plates of Examples A1-A9 and the comparative steels of Comparative Examples B1-B4. In the present invention, the plating layer is formed by colling the plating liquid on the substrate, and the composition of the plating layer is substantially consistent with the composition of the plating bath.

**Table 1. (wt.%, the balance is Zn and inevitable impurities)**

| No. | Al | Mg | Si | Zr | Ca |
|---|---|---|---|---|---|
| A1 | 54 | 2.0 | 1.5 | 0.028 | 0.047 |
| A2 | 55 | 2.4 | 1.6 | 0.037 | 0.021 |
| A3 | 60 | 4.0 | 3.0 | 0.016 | 0.01 |
| A4 | 65 | 5.0 | 2.0 | 0.01 | 0.062 |
| A5 | 50 | 1.0 | 1.4 | 0.058 | 0.1 |
| A6 | 45 | 0.2 | 0.1 | 0.1 | 0.074 |
| A7 | 48 | 0.5 | 1.0 | 0.15 | 0.001 |
| A8 | 53 | 1.5 | 0.7 | 0.001 | 0.15 |
| A9 | 56 | 3.0 | 1.6 | 0.073 | 0.035 |
| B1 | 55 | 2.1 | 1.2 | *0* | *0* |
| B2 | 54 | 1.9 | 1.6 | *0* | *0* |
| B3 | 57 | 1.2 | 2.4 | *0* | *0* |
| B4 | 55 | 1.2 | 1.3 | *0* | *0* |

Table 2 lists the specific process parameters used in the above-mentioned process steps (1) - (6) for the zinc-aluminum-magnesium-plated steel plates of Examples A1-A9 and the comparative steel plates of Comparative Examples B1-B4.

**Table 2.**

| No. | Platin g bath temper ature (°C) | Plating layer thickne ss (µm) | Air cooling rate of first stage of staged cooling (°C/s) | Final cooling temperat ure of first stage of staged cooling (°C) | Roll cooling rate of second stage of staged cooling (°C/s) | Air cooling rate after roll cooling of second stage of staged cooling (°C/s) | Plate tempera ture entering quenchi ng water tank (°C) | Thickne ss of fingerpr int-resis tant film (µm) | Heating and baking temperatur e (°C) | Cooling rate of step (5) (°C/s) |
|---|---|---|---|---|---|---|---|---|---|---|
| A1 | 595 | 20 | 43 | 280 | 70 | 30 | 95 | 1.4 | 140 | 15 |
| A2 | 590 | 38 | 38 | 287 | 95 | 0 | 92 | 1 | 125 | 10 |
| A3 | 605 | 25 | 51 | 240 | 60 | 20 | 90 | 0.5 | 100 | 5 |
| A4 | 585 | 15 | 40 | 265 | 85 | 0 | 89 | 1.7 | 145 | 17 |
| A5 | 580 | 30 | 43 | 274 | 69 | 28 | 87 | 2 | 160 | 20 |
| A6 | 570 | 8 | 30 | 291 | 90 | 0 | 87 | 1.5 | 150 | 18 |
| A7 | 575 | 15 | 10 | 298 | 72 | 25 | 85 | 1 | 110 | 8 |
| A8 | 610 | 20 | 60 | 186 | 79 | 0 | 80 | 2.5 | 130 | 12 |
| A9 | 590 | 20 | 42 | 284 | 100 | 22 | 78 | 1 | 125 | 10 |
| B1 | 595 | 20 | 41 | 296 | *0* | 45 | 155 | 1.4 | 125 | 15 |
| B2 | 585 | 20 | 45 | 261 | *0* | 43 | 123 | 2 | 137 | 13 |
| B3 | 590 | 20 | 49 | 239 | *0* | 38 | 109 | 1 | 120 | 10 |
| B4 | 595 | 20 | 40 | 289 | 72 | 32 | 99 | 1.6 | 105 | 14 |

| | | | | | | | | | | |
|---|---|---|---|---|---|---|---|---|---|---|
| Note: In Table 2, if the "air cooling rate after roll cooling of second stage of staged cooling" is not "0 (zero)", it indicates that both roll cooling and air cooling were used during the second stage cooling process. If the "Air cooling rate after roll cooling of second stage of staged cooling" is "0 (zero)", it indicaties that only roll cooling was used during the second stage cooling process. | | | | | | | | | | |

The finished steel coils obtained in Examples A1-A9 and Comparative Examples B1-B4 were sampled respectively, and the humid-heat resistance tests of steel coil samples of each example and comparative example were controlled to carry out simultaneously under the same conditions. The steel plates were stacked and treated for 24 hours under humid-heat conditions, and the lightness values of the surface and color differences ΔE of the plated steel plates of each example and comparative example before and after the test are listed in Table 3.

The specific operations of the humid-heat resistance test were as follows: before the test, the lightness value of the surface of the steel plate to be tested was measured, and then the steel plates were stacked together, and a preload of 30 N·m is applied to clamp and fix the stacked steel plates. The fixed steel plates were placed in a humid-heat box, at 50°C and 95% humidity. The fixed steel plates were kept in the humid-heat box for 24 hours, removed from the box, and re-measured for the surface lightness values. By using the test, the change of the surface lightness value of the steel plate before and after the 24 hours of laminated humid-heat treatment test of Example A1-A9 and Comparative Examples B1-B4 can be effectively detected.

In addition, after the above test, the steel plate surfaces of each example and comparative example were further visually observed to confirm whether the steel plate surface was blackened, i.e., whether "blackening" occurred: "Yes" was recorded if "blackening" occurred; "No" was recorded if no "blackening" occurred, indicating that the steel plate still had good blackening resistance performance under humid-heat conditions. The relevant results are listed in Table 3 below.

Table 3 lists the results of the humid-heat resistance test of the finished steel coils of Examples A1-A9 and Comparative Examples B1-B4.

**Table 3.**

| No. | Lightness before 24 hours of laminated humid-heat test | Lightness after 24 hours of laminated humid-heat test | Color difference ΔE | Blackening occurred or not |
|---|---|---|---|---|
| A1 | 70.84 | 68.49 | 2.35 | NO |
| A2 | 72.1 | 70.28 | 1.82 | NO |
| A3 | 71.51 | 70.02 | 1.49 | NO |
| A4 | 72.04 | 70.92 | 1.12 | NO |
| A5 | 69.75 | 69.17 | 0.58 | NO |
| A6 | 70.25 | 69.41 | 0.84 | NO |
| A7 | 72.6 | 72.08 | 0.52 | NO |
| A8 | 71.18 | 70.87 | 0.31 | NO |
| A9 | 71.32 | 71.16 | 0.16 | NO |
| B1 | 70.5 | 61.13 | 9.37 | *YES* |
| B2 | 72.35 | 64.16 | *8.19* | *YES* |
| B3 | 71.1 | 67.48 | 3.62 | *YES* |
| B4 | 70.9 | 67.59 | *3.31* | *YES* |

| | | | | |
|---|---|---|---|---|
| Note: In Table 3, ΔE is the difference between the surface lightness value of the steel plate before the laminated humid-heat treatment and the surface lightness value after 24 hours of laminated humid-heat treatment. | | | | |

It can be seen from Table 3 that under the same conditions, after the humid-heat resistance test, the zinc-aluminum-magnesium-plated steel plates of the present invention had higher lightness values compared to the comparative steel plates, and the surface lightness values of the steel plates after the humid-heat resistance test was between 68.49 - 72.08. Moreover, the surface color differences ΔE of the zinc-aluminum-magnesium-plated steel plates of Examples A1-A9 before and after treatment for 24 hours under laminated humid-heat conditions were 0.16-2.35, all < 3, and no blackening was observed on the surfaces.

In contrast, the surface color differences ΔE of Comparative Examples B1-B4 before and after treatment for 24 hours under humid-heat conditions were > 3. And, the surface of the steel plates of the comparative steel plates of Comparative Examples B1-B4 were blackened and occured blackening problem after the humid-heat resistance test. Comparative Examples B1-B4 did not use the plating bath of the present invention to form the steel plate plating layer, resulting in poor humid-heat resistance and blackening resistance.

In summary, the zinc-aluminum-magnesium-plated steel plates prepared by the technical solution of the present invention have excellent blackening resistance, paticularly excellent blackening resistance under the laminated humid-heat conditions. The zinc-aluminum-magnesium-plated steel plates of the present invention have a wide application range, can effectively meet the needs of the current market and users, and have good promotion prospects and application value.

It should be noted that the combination of the technical features in this case is not limited to the combinations recorded in the claims or the combinations described in the specific embodiments. All technical features recorded in this case can be freely combinded or associated in any manner, unless there is a contradiction between them.

It should also be noted that the embodiments listed above are only the specific embodiments of the present invention. Obviously, the present invention is not limited to the above embodiments, and similar changes or deformations that can be directly derived or easily conceived by those skilled in the art from the contents disclosed by the present invention should all fall within the protection scope of the present invention.

## Claims

1. **A** zinc-aluminum-magnesium-plated steel plate, comprising a steel substrate and a plating layer provided on the steel substrate, wherein the surface of the plating layer is coated with a fingerprint-resistant film; the plating layer comprises the following components in mass percentage: Al: 45%-65%, Mg: 0.2%-5.0%, Si: 0.1%-3.0%, Zr: 0.001%-0.15%, Ca: 0.001%-0.15%, and the balance being Zn and inevitable impurities.

2. The zinc-aluminum-magnesium-plated steel plate according to claim 1, wherein the mass percentage contents of each component in the plating layer satisfy at least one of the following:
Al: 50%-60%,
Mg: 1.0%-3.0%,
Si: 1.0%-2.0%,
Zr: 0.01%-0.1%,
Ca: 0.01%-0.1%.

3. The zinc-aluminum-magnesium-plated steel plate according to claim 1, wherein the plating layer has a thickness of 8-38 µm.

4. The zinc-aluminum-magnesium-plated steel plate according to claim 1, wherein the fingerprint-resistant film has a thickness of 0.5-2.5 µm.

5. The zinc-aluminum-magnesium-plated steel plate according to claim 4, wherein the fingerprint-resistant film has a thickness of 1.0-2.0 µm.

6. The zinc-aluminum-magnesium-plated steel plate according to any one of the claims 1-5, wherein a surface color difference ΔE of the zinc-aluminum-magnesium-plated steel plate before and after treatment for 24 hours under laminated humid-heat conditions is < 3, where ΔE is the difference between the surface lightness value before laminated humid-heat treatment and the surface lightness value after 24 hours of humid-heat treatment.

7. A method for manufacturing the zinc-aluminum-magnesium-plated steel plate according to any one of claims 1-6, wherein the method comprises the following steps carried out in sequence:
(1) performing a pretreatment for a steel substrate;
(2) feeding the pretreated steel substrate into a plating bath to perform hot-dip galvanizing in the plating bath, obtaining a plated steel plate;
(3) after the plated steel plate leaves the plating bath, performing staged cooling as follows: a first stage is air cooling, the steel plate is cooled to 300°C or less, a cooling rate of the first stage is 10-60°C/s; a second step is roll cooling or roll cooling + air cooling, in which a cooling rate of roll cooling is 60-100°C/s; a third step is water-cooling in a quenching water tank, and a plate temperature is lower than 100°C when the plated steel plate enters the quenching water tank;
(4) coating a fingerprint-resistant film on the surface of the plated steel plate and heating and baking at 100-160°C to cure the film;
(5) cooling the plated steel plate to room temperature;
(6) coiling the plated steel plate into a finished product coil.

8. The method according to claim 7, wherein in step (2), a temperature of the plating bath is 570-610°C; and/or in step (3), the second stage is roll cooling + air cooling, in which a cooling rate of roll cooling is 60-100°C/s, and a cooling rate of air cooling is 20-30°C/s.

9. The method according to claim 7, wherein in step (4), the heating and baking is performed at 110-140°C.

10. The method according to in claim 7, wherein, in step (4), the heating and baking is performed by electromagnetic induction heating.

11. The method according to claim 7, wherein, in step (5), the cooling is performed by air cooling, and a cooling rate of the plated steel plate is 5-20°C/s.
